# EUROPÄISCHE PATENTSCHRIFT

(11) **EP 1 210 199 B1**
(45) Veröffentlichungstag und Bekanntmachung des Hinweises auf die Patenterteilung: **24.09.2003**
(21) Anmeldenummer: 00945870.4
(22) Anmeldetag: 04.07.2000
(51) Int. Cl.: B23B 31/117

(54) **SPANNEINRICHTUNG, INSBESONDERE FÜR HOHLE DÜNNWANDIGE WERKSTÜCKE**
CLAMPING DEVICE, IN PARTICULAR FOR THIN-WALLED HOLLOW PARTS
DISPOSITIF DE SERRAGE, EN PARTICULIER POUR DES PIECES CREUSES A PAROI MINCE

(30) Priorität: 09.07.1999 DE 19931861
(43) Veröffentlichungstag der Anmeldung: 05.06.2002
(73) Patentinhaber: HAINBUCH GMBH SPANNENDE TECHNIK, D-71672 Marbach (DE)
(72) Erfinder: WELLER, Hans-Michael, D-71672 Marbach (DE)
(74) Vertreter: Kastner, Hermann, Dipl.-Ing. Patentanwalt
(86) Internationale Anmeldenummer: EP0006270
(87) Internationale Veröffentlichungsnummer: WO01003870

(56) Entgegenhaltungen:
- EP-A- 0 240 218
- DE-A- 2 019 796
- GB-A- 476 885
- GB-A- 748 486
- US-A- 2 466 974
- US-A- 2 893 742
- US-A- 2 955 830
- US-A- 4 422 590

## Beschreibung

Die Erfindung betrifft eine Spanneinrichtung gemäß dem Oberbegriff von Anspruch 1 und 11 (siehe z.Bsp. US 2466974)

Beim spanabhebenden Bearbeiten von hohlen, dünnwandigen Werkstücken, z.B. von Hülsen, die nur auf ihrer Außenseite, nicht aber auch auf ihrer Innenseite bearbeitet werden, gibt es das Problem, daß die dem Aufspannen des Werkstückes dienende unbearbeitete Innenseite Formfehler aufweist, z.B. Unrundheit, meist in Verbindung mit ungleichmäßiger Wanddicke in Umfangsrichtung oder Abweichungen von der geraden Zylinderform, unter Umständen ebenfalls in Verbindung mit Wanddickenunterschieden in Längsrichtung. Bei der Verwendung einer herkömmlichen Spanneinrichtung werden die Werkstücke aufgrund dieser Formfehler ihrer Innenseite beim Einspannen elastisch verformt. Dadurch werden beim Bearbeiten der Werkstücke die Formfehler der Innenseite quasi auf die Außenseite übertragen. Damit kann weder eine große Formgenauigkeit noch eine sehr gute Oberflächengüte erreicht werden und auch die Zylindrigkeit kaum eingehalten werden. Das Einspannen solcher dünnwandigen Werkstücke an ihren beiden Stirnseiten kommt umso weniger in Betracht, je geringer die Wanddicke und je größer die Länge der Werkstücke sind, weil sie dann unter den Schnittkräften mehr oder weniger stark ausweichen. Außerdem neigen die Werkstücke dann zum Schwingen, so daß zusätzlich Rattermarken entstehen.

Der Erfindung liegt die Aufgabe zugrunde, eine Spanneinrichtung zu schaffen, mit der vor allem sehr dünnwandige und verhältnismäßig lange Werkstücke weitgehend unabhängig von Unregelmäßigkeiten ihrer Innenfläche einwandfrei gespannt werden können und ihre Außenseite mit der geforderten Genauigkeit und Oberflächengüte bearbeitet werden kann. Diese Aufgabe wird durch eine Spanneinrichtung mit den im Anspruch 1 angebenenen Merkmalen gelöst.

Ähnliche Probleme treten auch beim spanabhebenden Bearbeiten der Innenseite von dünnwandigen Werkstücken auf, deren Außenseite unbearbeitet bleibt, und zwar insbesondere dann, wenn die Werkstücke verhältnismäßig lang sind. Der Erfindung liegt daher auch die Aufgabe zugrunde, eine Spanneinrichtung zu schaffen, mir der vor allem sehr dünnwandige und verhältnismäßig lange Werkstücke weitgehend unabhängig von Unregelmäßigkeiten ihrer Außenfläche einwandfrei gespannt werden können und ihre Innenseite mit der geforderten Genauigkeit und Oberflächengüte bearbeitet werden kann. Diese Aufgabe wird durch eine Spanneinrichtung mit den im Anspruch 10 angebenenen Merkmalen gelöst.

Dadurch, daß anstelle von starren Spannbacken eine Spannhülse aus einem Elastomer verwendet wird, die auf einem glatten zylindrischen Spanndorn geführt wird und über ihre beiden Stirnseiten axial gestaucht wird, wird das quasi hydraulische Verhalten des Spannhülsenwerkstoffes ausgenutzt, um Unregelmäßigkeiten der Spannfläche des Werkstückes weitgehend suszugleichen. Dadurch, daß auf der Außenseite der Spannhülse metallische Auflagestreifen vorhanden sind, wird beim Aufschieben und Abziehen der Werkstücke Abrieb an der Spannhülse vermieden und dadurch eine höhere Lebensdauer der Spanneinrichtung und zugleich eine gleichbleibende Spannsicherheit und Spanngenauigkeit erreicht.

Bei einer Ausgestaltung nach Anspruch 2 bzw. Anspruch 12 läßt die Spenneinrichtung sich leichter an unterschiedliche Längen der Werkstücke anpassen.

Bei einer Ausgestaltung nach Anspruch 3 bzw. Anspruch 13 wird die beim Spannen der Spannhülsen auftretende axiale Reibungskraft zwischen der Spannhülse und ihrer Sitzfläche am Spanndorn bzw. am Grundkörper auf mehrere kürzere Abschnitte verteilt, wo sie im einzelnen und auch insgesamt geringer ist. Dadurch ist auch die radiale Spannkraft der Spanneinrichtung über die gesamte Einspannlänge zumindest annähernd gleichmäßig verteilt. Dadurch daß die Spannhülse kürzer als ihre Traghülse ausgebildet ist und sie über die Stirnseiten der Traghülse nicht übersteht und die Übertragung der axialen Spannkraft von zwischengeschalteten Druckringen übernommen wird, wird verhindert, daß beim Beginn des Spannvorganges die nachgiebigen Spannhülsen in die zunächst offenen Zwischenräume zwischen den Traghülsen hineingedrückt werden und dabei beschädigt werden.

Bei einer Ausgestaltung nach Anspruch 4 bzw. Anspruch 14 können beim Betätigen der Spanneinrichtung die Spannhülsen nur um das Unterschiedsmaß der Längenmaße gestaucht werden. Das ergibt eine genau definierte radiale Spannkraft und außerdem wird dadurch eine Überbeanspruchung sowohl der elastischen Spannhülsen, wie auch der dünnwandigen Werkstücke vermieden.

Bei einer Ausgestaltung nach Anspruch 5 bzw. Anspruch 15 wird die Anzahl der Bauteile der Spanneinrichtung vermindert.

Durch eine Ausgestaltung nach Anspruch 6 oder 6 bzw. nach Anspruch 16 oder 17 wird erreicht, daß die radiale Durchmesseränderung der Spannhülse überproportional zur axialen Stauchbewegung ist. Das gleich gilt für eine Ausgestaltung nach Anspruch 8 bzw. nach Anspruch 18, wobei ein größerer Übersetzungsfaktor zwischen der radialen Durchmesseränderung und der axialen Stauchbewegung erreicht wird.

Durch eine Ausgestaltung nach Anspruch 9 bzw. Anspruch 19 kann der Spanndorn bzw. der Grundkörper an seinem zweiten Ende abgestützt werden, so daß er unter den Schnittkräften weniger stark elastisch ausweicht und dadurch die Bearbeitungsgenauigkeit über die gesamte Länge des Werkstückes gleich bleibt.

Durch eine Ausgestaltung nach Anspruch 10 bzw. Anspruch 20 wird eine verhältnismäßig einfach herzustellende und zu bedienende Spannvorrichtung geschaffen.

Im folgenden wird die Erfindung anhand mehrerer in den Zeichnungen dargestellter Ausführungsbeispiele näher erläutert. Es zeigen:
- Fig. 1: eine teilweise geschnitten dargestellte Ansicht einer ersten Ausführungsform einer Spanneinrichtung mit mehreren Spannhülsen für die Außenspannung von Werkstücken;
- Fig. 2: eine Stirnansicht einer Spannhülse;
- Fig. 3: eine Draufsicht einer Spannhülse;
- Fig. 4: einen vergrößerten Ausschnitt aus Fig 1 mit zwei Spannhülsen;
- Fig. 5: einen vergrößerten Ausschnitt ähnlich Fig. 4 mit zwei abgewandelten Spannhülsen;
- Fig. 6: einen vergrößerten Ausschnitt ähnlich Fig. 4 mit zwei weiter abgewandelten Spannhülsen;
- Fig. 7: einen Längsschnitt einer weiteren Ausführungsform der Spannhülsen;
- Fig. 8: einen ausschnittsweise dargestellten Längsschnitt einer zweiten Ausführung der Spanneinrichtung mit mehreren Spannhülsen für die Außenspannung von Werkstücken.

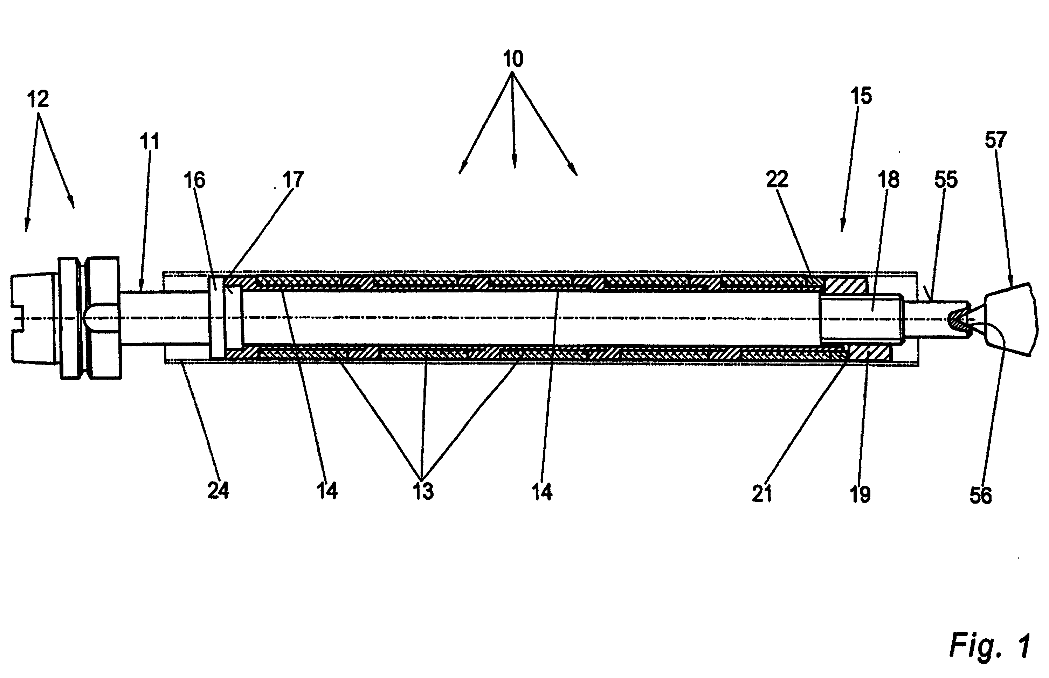

Die aus Fig. 1 ersichtliche Spanneinrichtung 10 weist als Hauptbaugruppen oder Hauptbauteile einen Spanndorn 11 mit Kupplungselementen 12, mehrere Spannhülsen 13 mit je einer Traghülse 14 und eine Spannvorrichtung 15 auf. In der oberen Hälfte ist die Spanneinrichtung 10 in gespanntem und in der unteren Hälfte in entspanntem Zustand dargestellt.

Der Spanndorn 11 ist ein langgestreckter kreiszylindrischer Körper, der an seinem in Fig. 1 links gelegenen Ende mit den Kupplungselementen 12 lösbar oder unlösbar verbunden ist, mittels der er mit der Hauptspindel einer Werkzeugmaschine gekoppelt werden kann. An seinem linken Endbereich ist der Spanndorn 11 mit einem Bund 16 versehen, dessen von den Kupplungselementen 12 abgekehrte ebene kreisringförmige Stirnfläche als erste axiale Anlogefläche 17 der Spannhülsen 13 dient. Am anderen Endbereich des Spenndorns 11 ist die Spannvorrichtung 15 angeordnet. Sie wird durch einen mit Außengewinde versehenen Längansbschnitt 18 und durch einen darauf abgestimmten und mit Innengewinde versehenen Spannring 19 gebildet. Die der ersten Anlagefläche 17 zugekehrte ebene kreisringförmige Stirnfläche des Spannrings 19 bildet eine zweite Anlagefläche 21 für die Spannringe 13. Aus Gründen der einfacheren Herstellung und der besseren Anpassungsmöglichkeit an unterschiedliche Einstellvorgaben, kann es zweckmäßig sein, zwischen der zweiten Anlagefläche 21 des Spannrings 18 und der nächstgelegenen Spannhülse 13 einen Druckring 22 einzufügen.

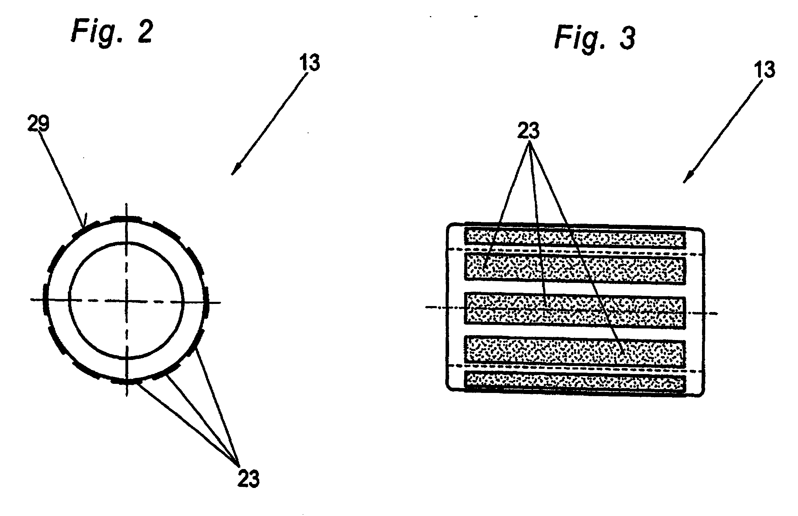

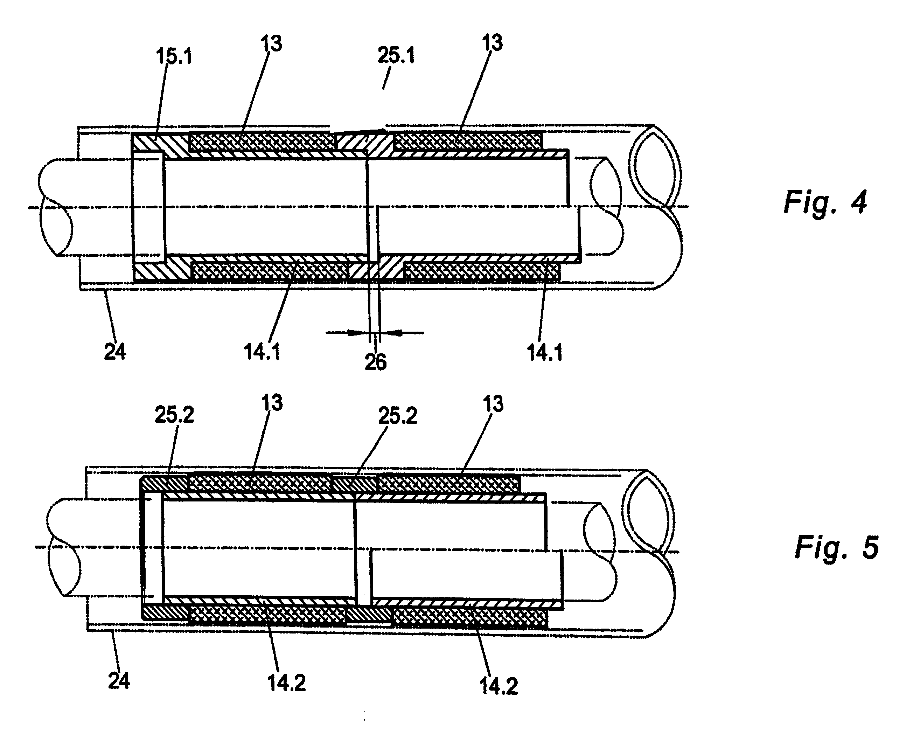

Wie aus Fig. 2 ... Fig. 4 ersichtlich ist, haben die Spannhülsen die Gestalt eines geraden Kreisringzylinders. Sie sind aus einem Elastomer hergestellt. Auf ihrer Außenseite sind mehrere Auflagestreifen 23 aus einem metallischen Werkstoff angeordnet. Diese Auflagestreifen 23 sind mit der Spannhülse 13 dauerhaft verbunden. Sie sind parallel zur Achse ausgerichtet und am Umfang der Spannhülse 13 gleichmäßig verteilt angeordnet. Die Außenseite der Auflagestreifen 23 bildet einen Zylinderflächenabschnitt, der auf den Innendurchmesser des Werkstückes 24 abgestimmt ist, das in Fig. 1 und zum Teil in den übrigen Figuren strichpunktiert angedeutet ist.

Die Spannhülsen 13 können unmittelbar auf den Schaft des Spanndorns 11 aufgeschoben sein. Dann ist der Innendurchmesser der Spannhülsen 13 auf den Außendurchmesser des Spanndorn 11 abgestimmt. Zweckmäßiger ist es jedoch, jede Spannhülse 13 auf eine Traghülse 14 aufzuschieben. Die Traghülsen 14 sind aus einem Werkstoff hergestellt, dessen Formfestigkeit größer als die Formfestigkeit des Werkstoffes der Spannhülse 13 ist. Von Vorteil ist eine gute Gleitpaarung zwischen dem Werkstoff der Spannhülsen 13 und demjenigen der Traghülsen 14. Dafür kommt auch ein metallischer Werkstoff in Betracht. Der Innendurchmesser der Traghülsen 14 ist auf den Außendurchmesser des Spanndorns 11 abgestimmt. Der Außendurchmesser der Traghülsen 14 ist auf den Innendurchmesser 13 der Spannhülsen 13 abgestimmt oder umgekehrt. Die Traghülsen 14 haben eine größere Länge als die Spannhülsen 13. Jede Spannhülse 13 ist auf ihrer Traghülse 14 in der Weise angeordnet, daß jede der Stirnflächen der Spannhülse 13 in axialer Richtung nicht über die Stirnfläche der Traghülse 11 übersteht.

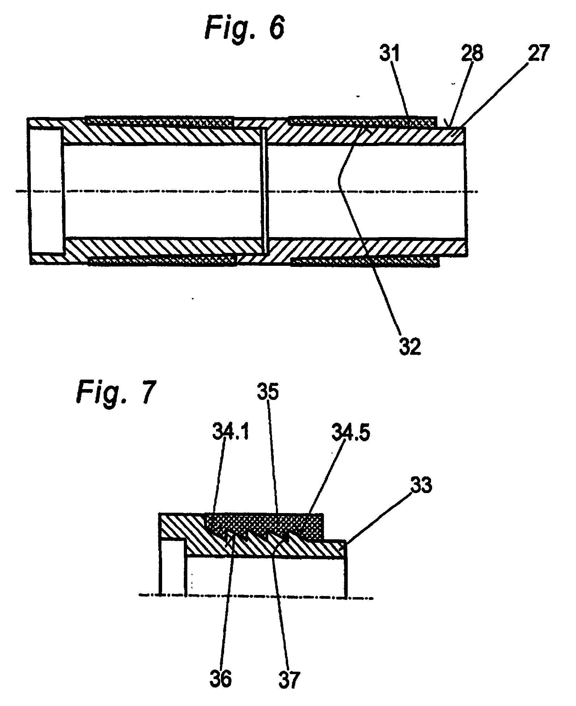

Aus Fig. 4 und 5 sind zwei unterschiedliche Ausführungsformen der Traghülse 14 ersichtlich, die zur Unterscheidung als Traghülse 14.1 (Fig. 4) bzw. als Traghülse 14.2 (Fig. 5) bezeichnet werden.

In der jeweils unteren Hälfte der Darstellungen sind die Spannhülsen 13 in ungespenntem Zustand und in der oberen Hälfte im gespannten Zustand dargestellt. Im ungespannten Zustand (untere Hälfte) hat die Außenseite der Spannhülse 13 und insbesondere die ihrer Auflagestreifen 23 einen geringen Abstand zur Innenfläche des Werkstückes 24, der der Deutlichkeit halber größer als in Wirklichkeit dargestellt ist. Im gespannten Zustand (obere Häfte) liegen die Außenseite der Spannhülsen 13 und die ihrer Auflagestreifen 23 an der Innenseite des Werkstückes 24 an. Die dafür notwendige radiale Spannbewegung der Spannhülsen 13 wird durch eine axiale Stauchung der Spannhülsen 13 bewirkt. Umgekehrt wird die radiale Entspannung der Spannhüsen 13 durch eine axiale Entlastung der Spannhülsen 14 bewirkt. Beides wird von der Spannvorrichtung 15 bewirkt. Dabei sind die Spannhülsen 13 zwischen der ersten Anlagefläche 17 am Spanndorn 11 und der zweiten Anlagefläche 21 am Spannring 18 eingespannt (Fig. 1).

Wenn die Spannhülsen 13 nicht unmittelbar auf dem Spanndorn sondern auf je einer Traghülse 14 sitzen, sind die Spannhülsen 13 kürzer als ihre Traghülsen 14. Die axiale Stauchkraft der Spannvorrichtung 15 wird dann mittels je eines Druckringes 25 von einer Spannhülse 13 zur nächsten Obertragen. Diese Druckringe 25 sind bei der Ausführungsform nach Fig. 5 als Druckringe 25.2 selbständige Teile, deren Innendurchmesser auf den Außendurohmesser der zugehörigen Traghülsen 14.2 abgestimmt ist. Ihr Außendurchmesser ist höchstens gleich dem Innendurchmesser des Werkstückes 24. Bei der Ausführungsform nach Fig. 4 sind die Druckringe 25.1 mit den zugehörigen Traghülsen 14.1 dauerhaft verbunden und zwar zweckmäßigerweise einstückig mit ihnen hergestellt.

Sowohl bei der Ausführungsform nach Fig. 4 wie auch bei der Ausführungsform nach Fig. 5 werden die Spannhülsen 13, ihre Traghülsen 14 und die Druckringe 25 zweckmäßigerweise so gestaltet, daß im ungespannten Zustand der Spannhülsen 13 die Summe der axialen Erstreckung des Druckringes 25 und der Spannhülse 13 um ein vorgegebenes axiales Abstandsmaß 26 (Fig. 4) größer als die axiale Erstreckung ihrer Traghülse 14 ist.

Dadurch bilden die Traghülsen 14 im gespannten Zustand der Spannhülsen 13 einen Anschlag, der verhindert, daß die Spannhüsen 13 von der Spannvorrichtung 15 über ein auf das betreffende Werkstück 24 abgestimmtes Maß hinaus axial gestaucht und dadurch radial aufgeweitet werden.

Aus Fig. 6 und 7 sind zwei abgewandelte Ausführungsformen von Spannhülsen und ihren Traghülsen zu ersehen.

An der Traghülse 27 ist die Sitzfläche 28 für die Spannhülse 31 als Kegelstumpfmantelfläche ausgebildet. Die Innenfläche 32 der Spannhülse 31 ist auf die Sitzfläche 28 abgestimmt, d.h. sie ist als hohle Kegelstumpfmantelfläche ausgebildet.

Bei der Ausführungsform nach Fig. 7 wird an der Traghülse 33 die Sitzfläche 34 für die Spannhülse 35 durch mehrere Längenabschnitte 34.1 ... 34.5 einer Kegelstumpfmantelfläche gebildet. Die Innenfläche 36 der Spannhülse 35 sind durch darauf abgestimmte Längenabschnitte einer hohlen Kegelstumpfmantelfläche gebildet. Die Sitzflächenabschnitte 34.1 ... 34.5 folgen in gleicher Ausrichtung axial aufeinander. Sie schließen über je eine kreisringförmige ebene Zwischenfläche 37 aneinander an.

Bei der Ausführungsform nach Fig. 7 ist der Kegelwinkel der Sitzflächen 34 bzw. der Innenfläche 36 deutlich größer als bei der Ausführungsform nach Fig. 6. Dadurch ist bei einem vorgegebenen axialen Stauchweg die radiale Dehnung der Spannhülse 35 größer als bei der Spannhülse 31.

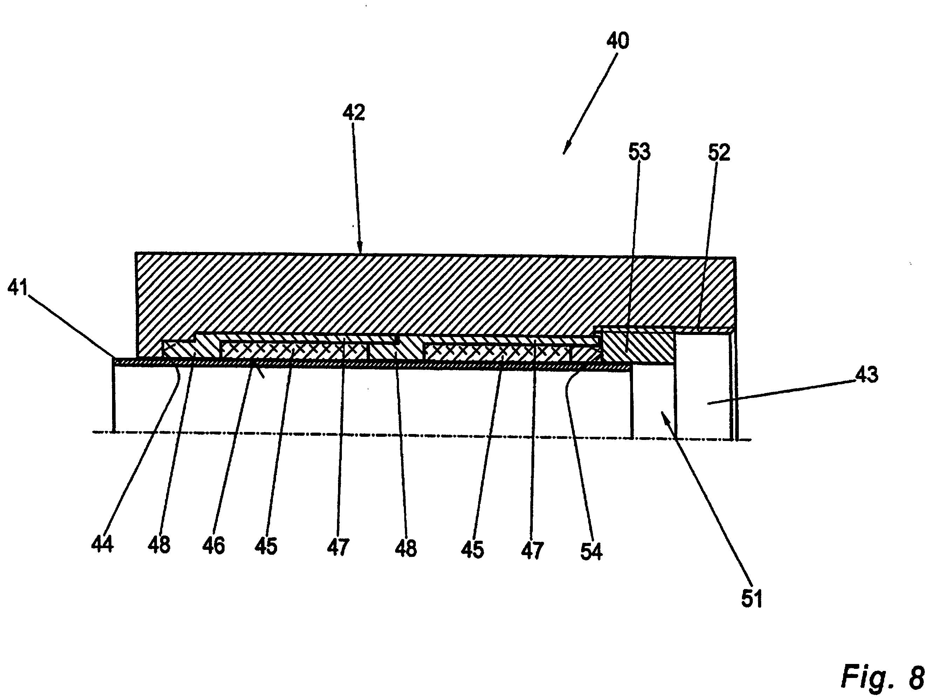

Aus Fig. 8 ist eine Spanneinrichtung 40 für das Außenspannen von dünnwandigen hülsenförmigen Werkstucken 41 zu ersehen, die auf ihrer Innenseite bearbeitet werden. Die Kupplungselemente für das Koppeln mit einer Werkzeugmaschine sind nicht dargestellt.

Die Spannvorrichtung 40 weist einen hohlen Grundkörper 42 mit dem näherungsweise hohlzylindrischen Innenraum 43 auf. An einem Endbereich des Innenraumes 43 ist am Grundkörper 42 eine erste Anlagefläche 44 vorhanden die axial ausgerichtet ist und dem anderen Endbereich zugekehrt ist.

Im Innenraum 43 des Grundkörpers 42 sind mehrere Spannhülsen 45 angeordnet, die aus einem Elastomer hergestellt sind. Die Innenfläche 46 der Spannhülsen 45 bildet die Spannfläche für das Werkstück 41. Sie ist mit einer Anzahl Auflagestreifen versehen, wie das bei der außen gelegenen Spannfläche der Spannhülsen 13 der Spanneinrichtung 10 der Fall ist. Die Spannhülsen 45 sitzen in je einer Traghülse 47, die mit je einem Druckring 48 zusammen einstückig hergestellt ist. Die für die radiale Spannbewegung der Spannhülsen 45 erforderliche axiale Stauchung wird von einer Spannvorrichtung 51 bewirkt, die durch einen mit Innengewinde versehenen Längenabschnitt der Innenfläche des Grundkörpers 42 und durch einen darin eingeschraubten kreisringförmigen Spannring 53 gebildet wird.

Bei der Spanneinrichtung 40 ist die Wirkungsrichtung ihrer Teile in radialer Richtung umgekehrt zu derjenigen der entsprechenden Teile der Spanneinrichtung 10 (Fig. 1). Unter Berücksichtigung dieses Umstandes entsprechen ihre Teile einander weitgehend nach Aufbau und Wirkungsweise. Insoweit wird auf die Beschreibung dieser Spanneinrichtung 10 verwiesen, die auch die Abwandlungen nach Fig. 5 ... Fig. 7 einschließt.

Wie in Fig. 1 rechts angedeutet ist, kann es insbesondere bei Werkstücken größerer Länge und/oder geringeren Durchmessers und kleiner Wanddicke und bei entsprechend ausgebildeter Spanneinrichtung zweckmäßig sein, die Spenneinrichtung nicht nur an dem Ende mit den Kupplungselementen für die Verbindung mit der Hauptspindel einer Werkzeugmaschine einzuspannen, sondern sie auch am entgegengesetzten Ende abzustützen. Das kann auf unterschiedliche Weise geschehen, beispielsweise über eine außenliegende und/oder über eine innenliegende Aufnahmefläche.

Der Spanndorn 11 weist außerhalb der Spannvorrichtung 15 sowohl die außenliegende zylindrische Aufnahmefläche 55 wie auch in seiner Stirnseite als innenliegende Aufnahmefläche die Zentrierbohrung 56 auf. Mit letzterer wirkt eine mitlaufende Körnerspitze 57 zusammen. Für die außenliegende Aufnahmefläche 55 kann ein frei mitlaufendes oder ein angetriebenes Spannfutter eingesetzt werden.

## Patentansprüche

1. Spanneinrichtung mit den Merkmalen:
- es ist ein Spanndorn (11) vorhanden, der zumindest on einem Ende mit Kupplungselementen (12) für das Kuppeln mit der Hauptspindel einer Werkzeugmaschine versehen ist,
- der Spanndorn (11) weist am einen Endbereich eine erste Anlagefläche (17) auf
-- die axial ausgerichtet ist und dem anderen Endbereich des Spanndorns (11) zugekehrt ist
-- die am Spanndorn (11) in axialer Richtung unverschieblich angeordnet ist,
- am Spanndorn (11) ist am anderen Endbereich eine zweite Anlagefläche (21) vorhanden,
-- die axial ausgerichtet ist und dem einen Endbereich zugekehrt ist und
-- die an einem Spannkörper (19) angeordnet ist, der am Spanndorn (11) in axialer Richtung verschieblich geführt ist,
- es ist eine Spannvorrichtung (15) vorhanden, mittels der der Spannkörper (19) mit der zweiten Anlegefläche (21) relativ zur ersten Anlagefläche (17) verstellbar ist und unter Aufbringung einer axialen Spannkraft am Spanndorn (11) festlegbar ist,
- es ist wenigstens eine Spannhülse (13) vorhanden,
-- die aus einem Elastomer hergestellt ist,
-- deren Innendurchmesser auf den Außendurchmessers des Spanndorns (11) abgestimmt ist,
-- deren Stirnflächen auf die erste Anlagefläche (17) bzw. auf die zweite Anlagefläche (21) abgestimmt sind,
**dadurch gekennzeichnet, daß**
- die Spannhülse (13) auf ihrer Außenseite mehrere Auflagestreifen (23) aufweist,
-- die aus einem metallischen Werkstoff hergestellt sind,
-- die mit der Spannhülse (13) dauerhaft verbunden sind,
-- die am Umfang der Spannhülse (13) gleichmäßig verteilt angeordnet sind und
-- deren Außenseite (29) je einen Zylinderflächenabschnitt bildet, der auf den Innendurchmesser des Werkstücks (24) abgestimmt ist.

2. Spanneinrichtung nach Anspruch 1, mit den Merkmalen:
- es sind mehrere Spannhülsen (13) vorhanden,
-- die auf dem Spanndorn (11) axial verschieblich geführt sind und
-- die zwischen der ersten Anlagefläche (17) am Spanndorn (11) und der zweiten Anlagefläche (21) am ringförmigen Spannkörper (19) angeordnet sind.

3. Spanneinrichtung nach Anspruch 2, mit den Merkmalen,
- für jede Spannhülse (13) ist eine Traghülse (14) vorhanden,
-- die aus einem Werkstoff hergestellt ist, dessen Formfestigkeit größer als die Formfestigkeit der Spannhülse (13) ist,
-- deren Innendurchmesser auf den Außendurchmesser des Spanndorns (11) abgestimmt ist und
-- auf deren Außendurchmesser der Innendurchmesser der Spannhülse (13) abgestimmt ist
- die Traghülsen (14) haben eine größere Länge als die Spannhülsen (13),
- jede Spannhülse (13) ist auf ihrer Traghülse (14) in der Weise angeordnet, daß jede der Stirnflächen der Spannhülse (13) in axialer Richtung nicht Ober die Stirnflächen der Traghülse (14) überstehen,
- zwischen je zwei aufeinanderfolgenden Spannhülsen (13) ist je ein Druckring (25) angeordnet,
-- dessen Innendurchmesser auf den Außendurchmesser der Traghülsen (14) abgestimmt ist und
-- dessen Außendurchmesser höchstens gleich dem Innendurchmesser des Werkstückes (24) ist.

4. Spanneinrichtung nach Anspruch 3, mit den Merkmalen:
- die Summe der axialen Erstreckung des Druckringes (25) und der Spannhülse (13) ist um ein vorgegebenes Maß (26) größer als die axiale Erstreckung ihrer Traghülse (14).

5. Spanneinrichtung nach Anspruch 3 oder 4, mit den Merkmalen:
- jeder Druckring (25) ist mit dem Endbereich einer Traghülse (14) lösbar oder unlösbar verbunden, vorzugsweise mit ihr einstückig hergestellt.

6. Spanneinrichtung nach Anspruch 1 oder 2, mit den Merkmalen:
- am Spanndorn ist eine Sitzfläche für jede Spannhülse als Kegelstumpfmantelfläche ausgebildet, die sich zur ersten Anlagefläche hin erweitert,
- die Innenfläche der Spannhülse ist auf ihre Sitzfläche abgestimmt.

7. Spanneinrichtung nach Anspruch 3 oder 4, mit den Merkmalen:
- an der Traghülse (27) ist eine Sitzfläche (28) für die Spannhülse (31) als Kegelstumpfmantelfläche ausgebildet,
- die Innenfläche (32) der Spannhülse (31) ist auf ihre Sitzfläche (28) an der Traghülse (27) abgestimmt.

8. Spanneinrichtung nach einem der Ansprüche 1 bis 5, mit den Merkmalen:
- am Spanndorn oder an einer Traghülse (33) wird eine Sitzfläche (34) für die Spannhülse (35) durch mehrere Längenabschnitte einer Kegelstumpfmantelfläche gebildet,
- - die in gleicher Ausrichtung axial aufeinanderfolgen und
- - die über je eine Zwischenfläche (37) aneinander anschließen, die vorzugsweise als ebene Kreisringfläche ausgebildet ist.

9. Spanneinrichtung nach einem der Ansprüche 1 bis 8, mit dem Merkmal:
- der Spanndorn (11) weist an dem von den Kupplungselementen (12) abgekehrten Ende eine außenliegende und/oder eine innenliegende Aufnahmefläche (55; 56) für eine Abstützvorrichtung (57) auf.

10. Spanneinrichtung nach einem der Ansprüche 1 bis 9, mit den Merkmalen:
- die Spannvorrichtung (15) wird gebildet
- - durch einen mit Außengewinde versehenen Längenabschnitt (18) des Spanndorns (11) und
- - durch einen darauf abgestimmten Spannring (19) mit Innengewinde.

11. Spanneinrichtung mit den Merkmalen:
- es ist ein zumindest teilweise hohler Grundkörper (42) vorhanden, der zumindest an einem Ende mit Kupplungselementen für die Verbindung mit der Hauptspindel einer Werkzeugmaschine versehen ist,
- der Grundkörper (42) weist in seinem Innenraum (43) am einen Endbereich eine erste Anlagefläche (44) auf,
- - die axial ausgerichtet ist und dem anderen Endbereich zugekehrt ist und
- - die am Grundkörper (42) axial unverschieblich angeordnet ist,
- im Innenraum (43) des Grundkörpers (42) ist am anderen Endbereich eine zweite Anlagefläche (54) vorhanden,
-- die axial ausgerichtet ist und dem einen Endbereich zugekehrt ist und
-- die an einem ringförmigen Spannkörper (53) angeordnet ist, der am Grundkörper (42) in axialer Richtung verschieblich geführt ist.
- es ist eine Spannvorrichtung (51) vorhanden, mittels der der Spannkörper (53) mit der zweiten Anlagefläche (54) relativ zur ersten Anlagefläche (44) verstellbar ist und unter Aufbringung einer axialen Spannkraft am Grundkörper (42) feststellbar ist,
- es ist wenigstens eine Spannhülse (45) vorhanden,
-- die aus einem Elastomer hergestellt ist,
-- deren Außendurchmesser auf den Innendurchmesser des Innenraums des Grundkörpers abgestimmt ist und
-- deren Stirnflächen auf die erste Anlagefläche (44) bzw. auf die zweite Anlagefläche (54) am Grundkörper (42) abgestimmt sind, **dadurch gekennzeichnet daß**
- die Spannhülse (45) auf ihrer Innenseite mehrere Auflagestreifen aufweist,
-- die aus einem metallischen Werkstoff hergestellt sind,
-- die mit der Spannhülse (45) dauerhaft verbunden sind,
-- die am Umfang gleichmäßig verteilt angeordnet sind und
-- deren Innenseite je einen Zylinderflächenabschnitt bilden, der auf den Außendurchmesser des Werkstückes (41) abgestimmt ist.

12. Spanneinrichtung nach Anspruch 11, mit den Merkmalen:
- es sind mehrere Spannhülsen (45) vorhanden,
-- die im Innenraum (43) des Grundkörpers (42) axial verschieblich geführt sind und
-- die zwischen der ersten Anlagefläche (44) am 6rundkörper (42) und der zweiten Anlagefläche (54) am ringförmigen Spannkörper (53) angeordnet sind.

13. Spanneinrichtung nach Anspruch 12, mit den Merkmalen:
- für jede Spannhülse (45) ist eine Traghülse (47) vorhanden
-- die aus einem Werkstoff hergestellt ist, dessen Formfestigkeit größer als die Formfestigkeit der Spannhülse (45) ist
-- deren Außendurchmesser auf den Innendurchmessers des Innenraumes (43) des Grundkörpers (42) abgestimmt ist und
-- auf deren Innendurchmesser der Außendurchmesser der Spannhülse (45) abgestimmt ist,
- die Traghülsen (47) haben eine größere Länge als die Spannhülsen (45),
- jede der Spannhülsen (45) ist an ihrer Traghülse (47) in der Weise angeordnet, daß jede der Stirnseiten der Spannhülse (45) in axialer Richtung nicht über die Stirnseite ihrer Traghülse (47) übersteht,
- zwischen je zwei aneinander anschließenden Spannhülsen (45) ist je ein Druckring (48) angeordnet,
-- dessen Außendurchmesser auf den Innendurchmesser der Traghülsen (47) abgestimmt ist und
-- dessen Innendurchmesser mindestens gleich dem Außendurchmesser des Werkstückes (41) ist.

14. Spanneinrichtung nach Anspruch 12, mit den Merkmalen:
- die Summe der axialen Erstreckung des Druckringes (48) und der Spannhülse (45) ist um ein vorgegebenes Maß größer als die axiale Erstreckung der Traghülse (47).

15. Spanneinrichtung nach Anspruch 12, mit den Merkmalen:
- jeder Druckring (48) ist mit dem Endbereich einer Traghülse (47) lösbar oder unlösbar verbunden, vorzugsweise mit ihr einstückig hergestellt.

16. Spanneinrichtung nach Anspruch 11 oder 12, mit den Merkmalen:
- am Grundkörper ist eine Sitzfläche für jede Spannhülse als hohle Kegelmantelfläche ausgebildet, die sich zur ersten Anlagefläche hin verjüngt,
- die Außenfläche der Spannhülsen ist auf die Sitzfläche am Grundkörper abgestimmt.

17. Spanneinrichtung nach Anspruch 12 oder 13, mit den Merkmalen:
- an der Traghülse ist eine Sitzfläche für die Spannhülse als hohle Kegelmantelfläche ausgebildet,
- die Außenfläche der Spannhülse ist auf die Sitzfläche an der Traghülse abgestimmt.

18. Spenneinrichtung nach einem der Ansprüche 10 bis 13, mit den Merkmalen:
- am Grundkörper oder an einer Traghülse wird eine Sitzfläche für die Spannhülse durch mehrere Längenabschnitte einer hohlen Kegelmantelfläche gebildet,
- - die in gleicher Ausrichtung axial aufeinanderfolgen und
- - die über je eine Zwischenfläche aneinander anschließen, die vorzugsweise als ebene Kreisringflächen ausgebildet ist.

19. Spanneinrichtung nach einem der Ansprüche 10 bis 16, mit dem Merkmal:
- der Grundkörper weist an dem von den Kupplungselementen abgekehrten Ende eine außenliegende Aufnahmefläche für eine Abstützvorrichtung auf.

20. Spannvorrichtung nach einem der Ansprüche 10 bis 17, mit den Merkmalen:
- die Spannvorrichtung (51) wird gebildet
- - durch einen mit Innengewinde versehenen Längenabschnitt (52) des Grundkörpers (42) und
- - durch einen darauf abgestimmten Spannring (53) mit Außengewinde.

## Claims

1. A clamping device with the features:
- a clamping mandrel (11) is present, which is provided at least at one end with coupling elements (12) for coupling to the main spindle of a machine tool,
- at one end region the clamping mandrel (11) has a first abutment face (17)
-- which is orientated axially and which faces the other end region of the clamping mandrel (11) and
-- which is arranged on the clamping mandrel (11) so as to be non-displaceable in the axial direction,
- at the other end region a second abutment face (21) is provided on the clamping mandrel (11),
-- the second abutment face (21) being orientated axially and facing the one end region and
-- being arranged on a clamping member (19) which is guided on the clamping mandrel (11) so as to be displaceable in the axial direction,
- a clamping device (15) is present, by means of which the clamping member (19) with the second abutment face (21) can be adjusted relative to the first abutment face (17) and can be secured on the clamping mandrel (11) with the application of an axial clamping force,
- at least one clamping sleeve (13) is present,
-- which is produced from an elastomer,
-- the internal diameter of which is co-ordinated with the external diameter of the clamping mandrel (11) and
-- the end faces of which are co-ordinated with the first abutment face (17) and with the second abutment face (21) respectively,
**characterized in that**
- the clamping sleeve (13) is provided on its outside with a plurality of abutment strips (23)
-- which are produced from a metallic material and
-- are permanently connected to the clamping sleeve (13) and
-- which are arranged uniformly distributed on the periphery of the clamping sleeve (13) and
-- the outside (28) of which forms a respective portion of the cylindrical face in each case which is co-ordinated with the internal diameter of the workpiece (24).

2. A clamping device according to Claim 1, with the features:
- a plurality of clamping sleeves (13) are present,
-- which are guided on the clamping mandrel (11) so as to be axially displaceable and
-- which are arranged between the first abutment face (17) on the clamping mandrel (11) and the second abutment face (21) on the annular clamping member (19).

3. A clamping device according to Claim 2, with the features:
- a support sleeve (14) is present for each clamping sleeve (13),
-- the support sleeve (14) being produced from a material, the dimensional stability of which is greater than the dimensional stability of the clamping sleeve (13),
-- the internal diameter of the support sleeve (14) being co-ordinated with the external diameter of the clamping mandrel (11), and
-- the internal diameter of the clamping sleeve (13) being co-ordinated with the external diameter of the support sleeve (14),
- the support sleeves (14) have a greater length than the clamping sleeves (13),
- each clamping sleeve (13) is arranged on its support sleeve (14) in such a way that each of the end faces of the clamping sleeve (13) does not project beyond the end faces of the support sleeve (14) in the axial direction,
- between two successive clamping sleeves (13) a respective thrust ring (25) is arranged in each case,
-- the internal diameter of which is co-ordinated with the external diameter of the support sleeves (14), and
-- the external diameter of which is at most equal to the internal diameter of the workpiece (24).

4. A clamping device according to Claim 3, with the features:
- the sum of the axial extension of the thrust ring (25) and of the clamping sleeve (13) is greater than the axial extension of the support sleeve (14) of the clamping sleeve (13) by a pre-determined amount (26).

5. A clamping device according to Claim 3 or 4, with the features:
- each thrust ring (25) is connected to the end region of a support sleeve (14) in a detachable or non-detachable manner, and is preferably produced in one piece with it.

6. A clamping device according to Claim 1 or 2, with the features:
- on the clamping mandrel a seating face for each clamping sleeve is constructed in the form of a frustoconical generated surface which is enlarged towards the first abutment face,
- the internal face of the clamping sleeve is co-ordinated with its seating face.

7. A clamping device according to Claim 3 or 4, with the features:
- on the support sleeve (27) a seating face (28) for the clamping sleeve (31) is constructed in the form of a frustoconical generated surface,
- the internal face (32) of the clamping sleeve (31) is co-ordinated with its seating face (28) on the support sleeve (27).

8. A clamping device according to one of Claims 1 to 5, with the features:
- on the clamping mandrel or on a support sleeve (33) a seating face (34) for the clamping sleeve (35) is formed by a plurality of longitudinal portions of a frustoconical generated surface,
- which follow one another axially in the same orientation and
- which adjoin one another in each case by way of a respective intermediate face (37) which is preferably constructed in the form of flat annular faces.

9. A clamping device according to one of Claims 1 to 8, with the feature:
- at the end remote from the coupling elements (12) the clamping mandrel (11) has a receiving face situated on the outside and/or a receiving face situated the inside (55; 56) for a support device (57).

10. A clamping device according to one of Claims 1 to 9, with the features:
- the clamping device (15) is formed
-- by a longitudinal portion (18) of the clamping mandrel (11) provided with an external thread and
-- by a clamping ring (19) co-ordinated with the latter and with an internal thread.

11. A clamping device with the features:
- a base member (42) is present which is hollow at least in part and which is provided at least at one end with coupling elements for connexion to the main spindle of a machine tool,
- in its inner space (43) at one end region the base member (42) has a first abutment face (44)
-- which is orientated axially and which faces the other end region and
-- which is arranged on the base member (42) so as to be non-displaceable in the axial direction,
- at the other end region a second abutment face (54) is provided in the inner space (43) of the base member (42),
-- the second abutment face (54) being orientated axially and facing the one end region and
-- being arranged on an annular clamping member (53) which is guided on the base member (42) so as to be displaceable in the axial direction,
- a clamping device (51) is present, by means of which the clamping member (53) with the second abutment face (54) can be adjusted relative to the first abutment face (44) and can be secured on the base member (42) with the application of an axial clamping force,
- at least one clamping sleeve (45) is present,
-- which is produced from an elastomer,
-- the external diameter of which is co-ordinated with the internal diameter of the interior of base member and
-- the end faces of which are co-ordinated with the first abutment face (44) and with the second abutment face (54) on the base member (42) respectively,
**characterized in that**
- the clamping sleeve (45) is provided on its inside with a plurality of abutment strips
-- which are produced from a metallic material and
-- are permanently connected to the clamping sleeve (45) and
-- which are arranged uniformly distributed on the periphery and
-- the inside of which forms a respective portion of the cylindrical face in each case which is co-ordinated with the external diameter of the workpiece (41).

12. A clamping device according to Claim 11, with the features:
- a plurality of clamping sleeves (45) are present,
-- which are guided in the inner space (43) of the base member (42) so as to be axially displaceable and
-- which are arranged between the first abutment face (44) on the base member (42) and the second abutment face (54) on the annular clamping member (53).

13. A clamping device according to Claim 12, with the features:
- a support sleeve (47) is present for each clamping sleeve (45),
- the support sleeve (47) being produced from a material, the dimensional stability of which is greater than the dimensional stability of the clamping sleeve (45),
-- the external diameter of the support sleeve (47) being co-ordinated with the internal diameter of the inner space (43) of the base member (42), and
-- the external diameter of the clamping sleeve (45) being co-ordinated with the internal diameter of the support sleeve (47),
- the support sleeves (47) have a greater length than the clamping sleeves (45),
- each of the clamping sleeves (45) is arranged on its support sleeve (47) in such a way that each of the end faces of the clamping sleeve (45) does not project beyond the end face of its support sleeve (47) in the axial direction,
- between two successive clamping sleeves (45) a respective thrust ring (48) is arranged in each case,
-- the external diameter of which is co-ordinated with the internal diameter of the support sleeves (47), and
-- the internal diameter of which is at least equal to the external diameter of the workpiece (41).

14. A clamping device according to Claim 12, with the features:
- the sum of the axial extension of the thrust ring (48) and of the clamping sleeve (45) is greater than the axial extension of the support sleeve (47) by a pre-determined amount.

15. A clamping device according to Claim 12, with the features:
- each thrust ring (48) is connected to the end region of a support sleeve (47) in a detachable or non-detachable manner, and is preferably produced in one piece with it.

16. A clamping device according to Claim 11 or 12, with the features:
- on the base member a seating face for each clamping sleeve is constructed in the form of a hollow frustoconical generated surface which tapers inwards towards the first abutment face,
- the external face of the clamping sleeves is co-ordinated with the seating face on the base member.

17. A clamping device according to Claim 12 or 13, with the features:
- on the support sleeve a seating face for the clamping sleeve is constructed in the form of a hollow frustoconical generated surface,
- the external face of the clamping sleeve is co-ordinated with the seating face on the support sleeve.

18. A clamping device according to one of Claims 10 to 13, with the features:
- on the base member or on a support sleeve a seating face for the clamping sleeve is formed by a plurality of longitudinal portions of a hollow frustoconical generated surface,
- which follow one another axially in the same orientation and
- which adjoin one another in each case by way of a respective intermediate face which is preferably constructed in the form of flat annular faces.

19. A clamping device according to one of Claims 10 to 16, with the feature:
- at the end remote from the coupling elements the base member has a receiving face situated on the outside for a support device.

20. A clamping device according to one of Claims 10 to 17, with the features:
- the clamping device (51) is formed
- - by a longitudinal portion (52) of the base member (42) provided with an internal thread and
- - by a clamping ring (53) co-ordinated with the latter and with an external thread.

## Revendications

1. Installation de serrage présentant les caractéristiques suivantes :
- elle comporte une broche de serrage (11) munie au moins à une extrémité, d'éléments de couplage (12) pour être couplée sur la poupée principale d'une machine-outil,
- la broche de serrage (11) présente au niveau d'une extrémité une première surface d'appui (17),
- alignée axialement et tournée vers l'autre extrémité de la broche de serrage (11),
- prévue de manière bloquée dans la direction axiale sur la broche de serrage (11),
- la broche de serrage (11) comporte une seconde surface d'appui (21) au niveau de son autre extrémité,
- cette surface d'appui est alignée axialement et est tournée vers la première extrémité et
- elle est prévue sur un organe de serrage (19) guidé de manière coulissante dans la direction axiale sur la broche de serrage (11),
- il est prévu un dispositif de serrage (15) à l'aide duquel l'organe de serrage (19) peut être réglé par la seconde surface d'appui (21) par rapport à la première surface d'appui (17) et se bloque sur la broche de serrage (11) en appliquant une force de serrage axiale, il est prévu au moins un manchon de serrage (13),
- réalisé en élastomère,
- son diamètre intérieur correspond au diamètre extérieur de la broche de serrage (11),
- ses surfaces frontales correspondent à la première surface d'appui (17) ou à la seconde surface d'appui (21),
**caractérisée en ce que**
- le manchon de serrage (13) comporte plusieurs bandes d'appui (23) sur son côté extérieur,
- réalisées en métal,
- ces bandes sont reliées solidairement au manchon de serrage (13),
- réparties régulièrement à la périphérie du manchon de serrage (13) et
- leur côté extérieur (29) forme chaque fois un segment de surface cylindrique correspondant au diamètre intérieur de la pièce (24).

2. Installation de serrage selon la revendication 1,
**caractérisée en ce qu'**
- elle comporte plusieurs manchons de serrage (13),
- guidés en coulissement axial sur la broche de serrage (11) et
- prévus entre la première surface d'appui (17) sur la broche de serrage (11) et la seconde surface d'appui (21) sur un organe de serrage (19) de forme annulaire.

3. Installation de serrage selon la revendication 2,
**caractérisée en ce que**
- pour chaque manchon de serrage (13) il est prévu un manchon de support (14),
- réalisé en une matière dont la tenue à la forme est supérieure à celle du manchon de serrage (13),
- son diamètre intérieur correspond au diamètre extérieur de la broche de serrage (11) et
- son diamètre extérieur est accordé sur le diamètre intérieur du manchon de serrage (13),
- les manchons de support (14) ont une longueur plus grande que celle des manchons de serrage (13),
- chaque manchon de serrage (13) est prévu sur son manchon de support (14) de façon que chacune des surfaces frontales du manchon de serrage (13) ne dépasse pas dans la direction axiale les surfaces frontales des manchons de support (14),
- un anneau de pression (25) est prévu entre chaque fois deux manchons de serrage successifs (13),
- le diamètre intérieur de cet anneau de pression correspond au diamètre extérieur des manchons de support (14) et
- son diamètre extérieur est au plus égal au diamètre intérieur de la pièce (24).

4. Installation de serrage selon la revendication 3,
**caractérisée en ce que**
- la somme de la longueur axiale de l'anneau de pression (25) et du manchon de serrage (13) est supérieure d'une mesure prédéterminée (26) par rapport à l'extension axiale de son manchon de support (14).

5. Installation de serrage selon la revendication 3 ou 4,
**caractérisée en ce que**
- chaque anneau de pression (25) est relié de manière amovible ou solidaire à la zone d'extrémité d'un manchon de support (14) en étant de préférence réalisée en une seule pièce avec ce manchon.

6. Installation de serrage selon l'une des revendications 1 ou 2,
**caractérisée en ce que**
- la broche de serrage comporte une surface d'appui en forme de surface-enveloppe tronconique pour chaque manchon de serrage et qui s'élargit vers la première surface d'appui,
- la surface intérieure du manchon de serrage correspond à sa surface d'appui.

7. Installation de serrage selon la revendication 3 ou 4,
**caractérisée en ce que**
- sur le manchon de support (27) est réalisée une surface d'appui (28) pour le manchon de serrage (31) comme surface-enveloppe tronconique,
- la surface intérieure (32) du manchon de serrage (31) correspond à sa surface d'appui (28) sur le manchon de support (27).

8. Installation de serrage selon l'une des revendications 1 à 5,
**caractérisée en ce que**
- la broche de serrage ou son manchon de support (33) forme une surface d'appui (34) pour la manchon de serrage (35) par plusieurs segments de longueur d'une surface-enveloppe tronconique,
- ses surfaces se suivant axialement dans la même direction et
- ses surfaces se rejoignant chaque fois par une surface intermédiaire (37) réalisée de préférence comme surface d'anneau de cercle plane.

9. Installation de serrage selon l'une des revendications 1 à 8,
**caractérisée en ce que**
- la broche de serrage (11) comporte à son extrémité opposée aux éléments de couplage (12), une surface de réception extérieure et/ou intérieure (55, 56) pour un dispositif d'appui (57).

10. Installation de serrage selon l'une des revendications 1 à 9,
**caractérisée en ce que**
- le dispositif de serrage (15) est formé par
- un segment de longueur (18) de la broche de serrage (11) muni d'un filetage extérieur et
- par une bague de serrage (19) à filetage intérieur, correspondante.

11. Installation de serrage,
présentant les caractéristiques suivantes :
- elle comporte un corps de base (42) au moins partiellement creux, muni au moins à une extrémité d'éléments de couplage pour être reliée à la poupée principale d'une machine-outil,
- le corps de base (42) présente dans son volume intérieur (43), dans une première zone d'extrémité, une première surface d'appui (44),
- alignée axialement et tournée vers l'autre zone d'extrémité et
- bloquée axialement sur le corps de base (42),
- le volume intérieur (43) du corps de base (42) comporte, au niveau de l'autre zone d'extrémité, une seconde surface d'appui (54),
- alignée axialement et tournée vers une zone d'extrémité et
- prévue sur un corps de serrage annulaire (53) guidé en coulissement dans la direction axiale sur le corps de base (42),
- un dispositif de serrage (51) à l'aide duquel le corps de serrage (53) est réglable avec la seconde surface d'appui (54) par rapport à la première surface d'appui (44) et peut être bloqué en appliquant une force de serrage axiale sur le corps de base (42),
- il est prévu au moins un manchon de serrage (45),
- ce manchon est en élastomère,
- le diamètre extérieur du manchon correspond au diamètre intérieur du volume intérieur du corps de base et
- ses surfaces frontales correspondent à la première surface d'appui (44) ou à la seconde surface d'appui (54) du corps de base (42),
**caractérisée en ce que**
- le manchon de serrage (45) comporte sur son côté intérieur plusieurs bandes d'appui,
- réalisées en métal,
- reliées de manière définitive au manchon de serrage (45),
- réparties régulièrement à la périphérie et
- leur côté intérieur forme chaque fois un segment de surface cylindrique correspondant au diamètre extérieur de la pièce (41).

12. Installation de serrage selon la revendication 11,
**caractérisée par**
- plusieurs manchons de serrage (45),
- guidés dans le volume intérieur (45) du corps de base (42) par coulissement axial et
- prévus entre la première surface d'appui (44) sur le corps de base (42) et la seconde surface d'appui (54) sur le corps de serrage annulaire (53).

13. Installation de serrage selon la revendication 12,
**caractérisée par**
- un manchon de support (47) pour chaque manchon de serrage (45),
- ce manchon de support est réalisé en une matière dont la résistance de forme est supérieure à celle du manchon de serrage (45),
- son diamètre extérieur correspond au diamètre intérieur du volume intérieur (43) du corps de base (42) et
- le diamètre extérieur du manchon de serrage (45) correspond à son diamètre extérieur,
- les manchons de support (47) sont plus longs que les manchons de serrage (45),
- chacun des manchons de serrage (45) est prévu sur son manchon de support (47) de façon que chaque face frontale du manchon de serrage (45) ne dépasse pas dans la direction axiale la face frontale de son manchon de support (47),
- un anneau de pression (48) respectif est prévu entre chaque fois deux manchons de serrage (45) adjacents,
- le diamètre extérieur de l'anneau de pression correspond au diamètre intérieur des manchons de support (47) et
- son diamètre intérieur est au moins égal au diamètre extérieur de la pièce (41).

14. Installation de serrage selon la revendication 12,
**caractérisée en ce que**
- la somme de la longueur axiale de l'anneau de pression (48) et du manchon de serrage (45) dépasse la longueur axiale du manchon de support (47) d'une longueur prédéterminée.

15. Installation de serrage selon la revendication 12,
**caractérisée en ce que**
- chaque anneau de pression (48) est relié de manière amovible ou solidaire à la zone d'extrémité d'un manchon de support (47), de préférence en faisant corps avec celui-ci.

16. Installation de serrage selon la revendication 11 ou 12,
**caractérisée en ce que**
- le corps de base comporte une surface d'appui pour chaque manchon de serrage sous la forme d'une surface conique creuse qui diminue en direction de la première surface d'appui,
- la surface extérieure des manchons de serrage correspond à la surface d'appui du corps de base.

17. Installation de serrage selon la revendication 12 ou 13,
**caractérisée en ce que**
- le manchon de support comporte une surface d'appui pour le manchon de serrage en forme de surface-enveloppe conique creuse,
- la surface extérieure du manchon de serrage correspond à la surface d'appui du manchon de support.

18. Installation de serrage selon l'une des revendications 10 à 13,
**caractérisée en ce que**
- le corps de base ou un manchon de support forme une surface d'appui pour le manchon de serrage par plusieurs segments de longueur d'une surface-enveloppe conique creuse,
- ses surfaces se suivant axialement dans la même direction et
- ses surfaces se rejoignent chaque fois par une surface intermédiaire, de préférence en forme de surface plane en anneau de cercle.

19. Installation de serrage selon l'une des revendications 10 à 16,
**caractérisée en ce que**
- le corps de base comporte, à son extrémité à l'opposé des éléments de couplage, une surface de réception extérieure pour un dispositif d'appui.

20. Installation de serrage selon l'une des revendications 10 à 17,
**caractérisée en ce que**
- le dispositif de serrage (51) est formé par
- un segment de longueur (52) du corps de base (42) muni d'un filetage intérieur et
- un anneau de serrage (53) à filetage extérieur correspondant.
